# EUROPÄISCHE PATENTSCHRIFT

(11) **EP 0 610 857 B1**
(45) Veröffentlichungstag und Bekanntmachung des Hinweises auf die Patenterteilung: **29.12.1997**
(21) Anmeldenummer: 94101824.4
(22) Anmeldetag: 07.02.1994
(51) Int. Cl.: G02F 1/313, G02F 1/025

(54) **Integriert optische Anordnung aus Rippenwellenleitern auf einem Substrat**
Integrated optical arrangement comprising rib waveguides on a substrate
Arrangement optique intégré comprenant des guides d'ondes à ruban sur un substrat

(30) Priorität: 12.02.1993 DE 4304272; 21.12.1993 DE 4343721
(43) Veröffentlichungstag der Anmeldung: 17.08.1994
(73) Patentinhaber: SIEMENS AKTIENGESELLSCHAFT, 80333 München (DE)
(72) Erfinder: Müller, Gustav, Dr., D-80993 München (DE); Stoll, Lothar, Dipl.-Phys., D-81369 München (DE); Wolff, Ulrich, Dipl.-Phys., D-81477 München (DE); Acklin, Bruno, Dr., D-80993 München (DE)

(56) Entgegenhaltungen:
- EP-A- 0 415 225
- ARCHIV FUR ELEKTRONIK UND UBERTRAGUNGSTECHNIK, Bd.41, Nr.6, November 1987, STUTTGART DE Seiten 377 - 380, XP000028813 Chen S P et al 'Integrated-optics switch with triple-ridge-guide coupler'
- CONFERENCE ON LASERS AND ELECTRO-OPTICS (CLEO) 1988, TECHNICAL DIGEST SERIES, Bd. 7, Paper TUK3, Seiten 74-75
- APPLIED PHYSICS LETTERS., Bd.45, Nr.4, August 1984, NEW YORK US Seiten 360 - 366 Donnelly J P et al 'Optical guided-wave gallium arsenide monolithic interferometer'
- JOURNAL OF APPLIED PHYSICS., Bd.69, Nr.5, März 1991, NEW YORK US Seiten 2810 - 2814, XP000224884 Yuanmin Cai et al 'A novel three-guide optical coupler using a taper-formed waveguide'
- ELECTRONICS LETTERS., Bd.30, Nr.3, Februar 1994, STEVENAGE GB Seiten 217 - 218 Acklin B et al 'Novel optical switches based on carrier injection in three and five waveguide couplers: TIC and SIC'

## Beschreibung

Die Erfindung betrifft eine integriert optische Anordnung aus Rippenwellenleitern nach dem Oberbegriff des Anspruchs 1.

Eine Anordnung der genannten Art ist aus Lynne A. Molter et al.: "Symmetrically detuned optical three-guide couplers in GaAs" bekannt. Bei dieser Anordnung weist der dritte Rippenwellenleiter einen elektrischen Kontakt auf und sie wird so betrieben, daß die Kontakte des ersten und zweiten Rippenwellenleiters auf Masse oder an gleicher Spannung liegen und an den Kontakt des dritten Rippenwellenleiters eine veränderliche Spannung angelegt wird.

In den dritten Wellenleiter wird optische Leistung eingekoppelt, die sich in Abhängigkeit von der Spannungsdifferenz zwischen dem Kontakt des dritten Rippenwellenleiters und den beiden Kontakten des ersten und zweiten Rippenwellenleiters vom dritten Rippenwellenleiter auf die beiden anderen Rippenwellenleiter verteilt und/oder im dritten Rippenwellenleiter verbleibt.

Eine ähnliche Anordnung geht aus Shung-Ping Chen und H.-G. Unger: "Integrated-Optics Switch with Triple-Ridge-Guide Coupler" hervor, die ebenfalls über den Kontakt des dritten Rippenwellenleiters gesteuert wird.

Aus Appl. Phys. Lett., Bd. 45, No. 4, August 1984, New York, US, S. 360-366 ist eine Anordnung der eingangs genannten Art in Form eines integriert-optischen Interferometers bekannt, bei welchem der erste und zweite Rippenwellenleiter jeweils einen pn-Übergang sowie einen Kontakt aufweist und der dritte Rippenwellenleiter kontkaktfrei ist. Der pn-Übergang und Kontakt sowohl des ersten als auch zweiten Rippenwellenleiters ist nur außerhalb des Bereichs des den dritten Rippenwellenleiter enthaltenden Zwischenraums und nicht im Bereich dieses Zwischenraums vorgesehen.

In der EP 0 415 225 A2 ist eine Anordnung aus zwei kontaktierten und jeweils einen pn- oder pin-Übergang aufweisendenRippenwellenleitern bekannt. Konkrete Ausführungen dieser Anordnung sind eine InP/InGaAsP-Richtkopplerstruktur und ein InP/InGaAsP-Mach-Zehnder-Struktur, die als Schalter betrieben werden.

Die im Anspruch 1 angegebene Erfindung weist als Schalter betrieben folgende Vorteile auf:
a) Es wird eine völlige Symmetrie der beiden Schaltzustände erreicht. Bei Schaltmatrizen wird so eine hohe Gleichmäßigkeit der Einfügedämpfung in den verschiedenen Schaltzuständen erreicht.
b) Es wird digitales Schaltverhalten erreicht. Die Nebensprechunterdrückung steigt monoton mit dem Schaltstrom. Der genaue Wert des Schaltstromes ist folglich unkritisch einzustellen.
c) Es wird eine erhöhte Separation der Ausgangswellenleiter des Schalters erreicht. Hierdurch wird der Aufbau von kurzen, verlustarmen Schaltmatrizen ermöglicht.
d) Es werden geringere Schaltverluste erreicht.
e) Es werden vergrößerte Herstellungstoleranzen, verringerte Polarisationsempfindlichkeit und erhöhte optische Bandbreite erreicht.

Bevorzugte und vorteilhafte Ausgestaltungen der erfindungsgemäßen Anordnung gehen aus den Ansprüchen 2 bis 14 hervor.

Ein vorteilhaftes Verfahren zum Betrieb der erfindungsgemaßen Anordnung ist im Anspruch 15 angegeben.

Die Erfindung wird in der nachfolgenden Beschreibung anhand der Figuren beispielhaft naher erläutert. Es zeigen:
- Figur 1: eine Draufsicht auf ein erstes Ausführungsbeispiel der erfindungsgemaßen Anordnung,
- Figur 2: einen längs der Linie II-II in Figur 1 genommenen Querschnitt durch einen Rippenwellenleiter und das darunterliegende Substrat,
- Figur 3: einen längs der Linie III-III in Figur 1 genommenen Schnitt durch einen verbreiterten Rippenwellenleiter und das darunterliegende Substrat,
- Figuren 4 und 5: eine Draufsicht auf zwei weitere Ausführungsbeispiele der erfindungsgemaßen Anordnung, bei denen die drei Rippenwellenleiter im gemeinsamen Längsabschnitt getapert sind,
- Figuren 6 bis 8: drei andere Ausführungsbeispiele der erfindungsgemäßen Anordnung, bei denen Rippenwellenleiter stirnseitige Endabschnitte aufweisen, in welchen die Rippe des betreffenden Rippenwellenleiters eine Verbreiterung aufweisen,
- Figur 9: ein noch anderes Ausführungsbeispiel der erfindungsgemaßen Anordnung, bei welchem außerhalb des Zwischenraums zwischen dem ersten und zweiten Rippenwellenleiter jeweils ein benachbarter Rippenwellenleiter an den ersten und zweiten Rippenwellenleiter angekoppelt ist.
- Figur 10: ein weiteres anderes Ausführungsbeispiel der erfindungsgemaßen Anordnung nach Figur 1, bei welchem der dritte Rippenwellenleiter eine größere Breite als der erste und zweite Rippenwellenleiter aufweist,und
- Figur 11: ein noch weiteres Ausführungsbeispiel der erfindungsgemaßen Anordnung nach Figur 1, bei welchem auf der vom Zwischenraum zwischen dem ersten und zweiten Rippenwellenleiter abgekehrten Seite dieser beiden Wellenleiter je ein einen kontaktierten pn- oder pin-Übergang aufweisender weiterer Rippenwellenleiter, der sich über die ganze Lange des gemeinsamen Langsabschnitts des ersten, zweiten und dritten Rippenwellenleiters erstreckt.

Die Figuren sind nicht maßstabliche schematische Darstellungen.

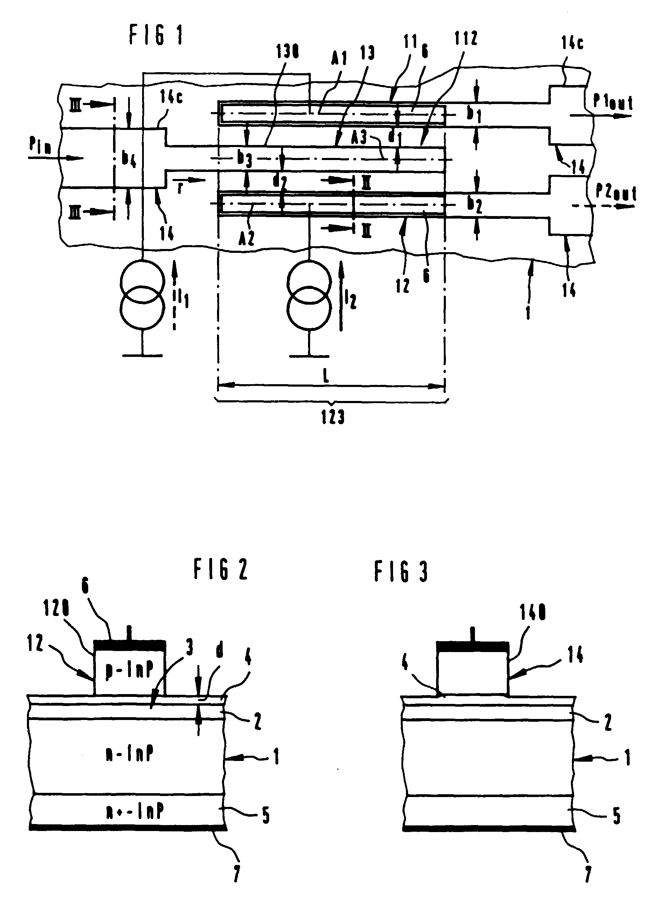

Gemäß allen Ausführungsbeispielen nach den Figuren 1 bis 9 besteht die integriert optische Anordnung aus einem ersten und zweiten streifenartigen Rippenwellenleiter 11 und 12 auf einem Substrat 1, das aus Halbleitermaterial besteht.

Jeder dieser Rippenwellenleiter 11 und 12 ist gemäß Figur 2 durch eine wellenleitende Schicht 2 auf oder in dem Substrat 1 und durch eine auf oder über der wellenleitenden Schicht 2 ausgebildete streifenförmige Rippe 110 bzw. 120 einer Breite b₁ bzw. b₂ definiert. Die Breite b₁ bzw. b₂ der Rippe 110 bzw. 120 definiert die Breite des streifenartigen Rippenwellenleiters 11 bzw. 12. Die wellenleitende Schicht 2 besteht aus undotiertem oder n-dotiertem Halbleitermaterial. Die streifenförmige Rippe 110 bzw. 120 besteht ebenfalls aus Halbleitermaterial. Die Breite b₁ wird vorzugsweise gleich der Breite b₂ gewählt.

Die streifenförmige Rippe 110 des ersten Rippenwellenleiters 11 und die streifenförmige Rippe 120 des zweiten Rippenwellenleiters 12 verlaufen durch einen Zwischenraum 112 getrennte nebeneinander, vorzugsweise so, daß ihre Längsachsen A₁ und A₃ parallel sind.

Im Bereich der streifenförmigen Rippe 110 bzw. 120 sowohl des ersten als auch zweiten Rippenwellenleiters 11 und 12 ist ober- oder unterhalb der wellenleitenden Schicht 2 des ersten bzw. zweiten Rippenwellenleiters 11 bzw. 12 ein von außen kontaktierbarer Übergang 3 von p-dotiertem zu n-dotiertem Material, d.h. ein pn-Übergang, oder ein von außen kontaktierbarer Übergang 3 von p-dotiertem Material zu undotiertem Material und von undotiertem Material zu n-dotiertem Material, d.h. ein pin-Übergang, derart integriert, daß der Übergang vom p-dotierten zum n-dotierten oder undotierten Material in einem Abstand d von der wellenleitenden Schicht 2 und das p-dotierte Material auf der von der wellenleitenden Schicht 2 abgekehrten Seite dieses Übergangs 3 angeordnet ist.

Ohne Beschränkung der Allgemeinheit ist in den Beispielen angenommen, daß das Substrat aus n-dotiertem InP, die wellenleitende Schicht 2 aus undotiertem InGaAsP und jede Rippe 110 bzw. 120 aus p-dotiertem InGaAsP besteht. Ferner ist angenommen, daß zwischen der Rippe 110 bzw. 120 und der wellenleitenden Schicht eine den Abstand definierende Abstandsschicht 4 aus undotiertem In angeordnet ist. Bei den dargestellten Beispielen liegt somit eiein pin-Übergang 3 vom n-dotierten Substrat 1 zur p-dotierten ein pin-Übergang vom n dotierten Substrat 1 zur p-dotierten Rippe 110 bzw. 120 vor. Die Gap-Wellenlange der wellenleitenden Schicht 2 ist beispielsweise 1,3 µm und die der Abstandsschicht 4 gleich 1,05 µm gewählt.

Der pn-Übergang oder pin-Übergang 3 sowohl des ersten als auch des zweiten Rippenwellenleiters 11 bzw. 12 ist kontaktiert. Diese Kontaktierung besteht aus einem auf der Rippe 110 bzw. 120 aufgebrachten p-Kontakt 6 und aus einem auf der Unterseite des Substrats 1 aufgebrachten n-Kontakt 7, der auf eine n⁺-dotierte Schicht 5 aus InP des Substrats 1 aufgebracht ist.

Erfindungsgemäß ist im Zwischenraum 112 zwischen den Rippen 110 und 120 des ersten und zweiten Rippenwellenleiters 11 und 12 ein dritter streifenartiger Rippenwellenleiter 13 angeordnet, der ebenfalls durch eine wellenleitende Schicht 2 auf oder in dem Substrat 1 und durch eine auf oder über der wellenleitenden Schicht 2 gebildete streifenförmige Rippe 130 einer Breite b₃ definiert. Die Breite b₃ der Rippe 130 definiert die Breite des dritten Rippenwellenleiters 13. Der Aufbau dieses dritten Rippenwellenleiters 13 ist gleich dem in Figur 2 gezeigten Aufbau, wobei lediglich der p-Kontakt 6 fehlt und die Bezugszeichen 120 und 12 durch 130 und 13 ersetzt sind.

Die Rippe 130 des dritten Rippenwellenleiters 13 weist einen derart geringen Abstand d₁ bzw. d₂ von der Rippe 110 des ersten Rippenwellenleiters 11 bzw. der Rippe 120 des zweiten Rippenwellenleiters 12 auf, daß ein in der wellenleitenden Schicht 2 unter der Rippe 130 des dritten Rippenwellenleiters 13 in einer Richtung der Längsachse A₃ dieses dritten Rippenwellenleiters 13 geführter optischer Mode in die wellenleitende Schicht 2 unter der Rippe 110 bzw. 120 des ersten Rippenwellenleiters 11 bzw. zweiten Rippenwellenleiters 12 überkoppeln und in Richtung der Längsachse A₁ bzw. A₂ dieses Rippenwellenleiters 11 bzw. 12 geführt werden kann. Analog kann ein im ersten bzw. zweiten Rippenwellenleiter 11 bzw. 12 geführter Mode in den dritten Rippenwellenleiter 13 überkoppeln.

Bei allen Ausführungsbeispielen erstreckt sich aus herstellungstechnischen Gründen der pn-Übergang bzw. pin-Übergang in jedem betreffenden Rippenwellenleiter ohne Unterbrechung. Die Kontaktierung des pn- bzw. pin-Übergangs 3 des ersten und zweiten Rippenwellenleiters 11 und 12 ist vorzugsweise nur in einem gemeinsamen Längsabschnitt 123 der drei Rippenwellenleiter 11, 12 und 13 vorhanden, in welchem diese drei Rippenwellenleiter 11, 12 und 13 gleichzeitig nebeneinander verlaufen.

Bei den Ausführungsbeispielen nach den Figuren 1 und 6 bis 9 weisen die drei Rippenwellenleiter 11, 12 und 13 in diesem gemeinsamen Längsabschnitt 123 eine gleichmäßige Breite auf, wobei vorzugsweise b₁ = b₂ = b₃ gewählt ist. Die Abstände d₁ und d₂ werden vorzugsweise gleich gewählt.

Beim Betrieb der in den Figuren 1 bis 9 dargestellten Anordnungen als Schalter werden die kontaktierten pn- bzw. pin-Übergänge 3 des ersten und zweiten Rippenwellenleiters 11 und 12 derart unsymmetrisch betrieben, daß der Übergang 3 eines der beiden Wellenleiter 11 und 12 in Durchlaßrichtung, der Übergang 3 des anderen Wellenleiters 12 bzw. 11 dagegen stromlos oder in Sperrichtung betrieben wird. Eine in den dritten Rippenwellenleiter 13 eingekoppelte und sich in einer Längsrichtung der Längsachse A3 dieses Wellenleiters 13, beispielsweise in der Längsrichtung r, ausbreitende optische Welle, wird im Längsabschnitt 123 in den ersten Rippenwellenleiter 11 übergekoppelt, wenn der Übergang 3 dieses ersten Rippenwellenleiters 11 in Durchlaßrichtung und der Übergang 3 des zweiten Rippenwellenleiters 12 stromlos oder in Sperrichtung betrieben wird. Dies bedeutet, daß durch den Übergang 3 des ersten Rippenwellenleiters 11 ein Strom I₁ > 0 fließt und eine Ladungsträgerinjektion erfolgt, während durch den Übergang 3 des zweiten Rippenwellenleiters 12 kein Strom fließt. Die in den dritten Wellenleiter 13 eingekoppelte optische Welle wird dagegen in den zweiten Rippenwellenleiter 12 übergekoppelt, wenn der Übergang 3 dieses Rippenwellenleiters 12 in Durchlaßrichtung und der Übergang 3 des ersten Rippenwellenleiters 11 dagegen stromlos oder in Sperrichtung betrieben wird. Durch den Übergang 3 des zweiten Rippenwellenleiters 12 fließt in diesem Fall ein Strom I2 > 0 und es erfolgt eine Ladungstragerinjektion, während durch den Übergang 3 des ersten Rippenwellenleiters 11 kein Strom fließt. Die Ströme I₁ bzw. I₂ können durch Anlegen von Spannungsdifferenzen zwischen die Kontakte 6 und 7 erzeugt werden.

Die Ladungstragerinjektion erfolgt räumlich getrennt von der geführten optischen Welle, wodurch eine geringe Plasmadampfung erreicht wird. Das Nebensprechen der als Schalter betriebenen Anordnung wird nicht durch eine Modeninterferenz, wie sie bei Richtkopplerschaltern auftritt, sondern durch die strominduzierte Asymmetrie der Rippenwellenleiter 11 und 12 bestimmt. Deshalb steigt die Nebensprechdämpfung monoton mit dem Schaltstrom und es wird eine "digitale" Schaltcharakteristik erreicht. Darüberhinaus wird die Polarisationsempfindlichkeit reduziert, die optische Bandbreite erhöht und die Herstellungstoleranzen werden vergrößert.

Bei allen Ausführungsbeispielen erstreckt sich die eigentliche Anordnung nur im Bereich des Längsabschnitts 123 der Länge L, d.h. diese Anordnung endet zugleich mit den Enden des Langsabschnitts 123. Da die Moden an diesen Enden nicht exakt an die Moden der einzelnen Wellenleiter 11, 12 und 13 angepaßt sind, entstehen hier Strahlungsverluste. Diese lassen sich reduzieren, wenn die Moden adiabatisch ineinander übergeführt werden.

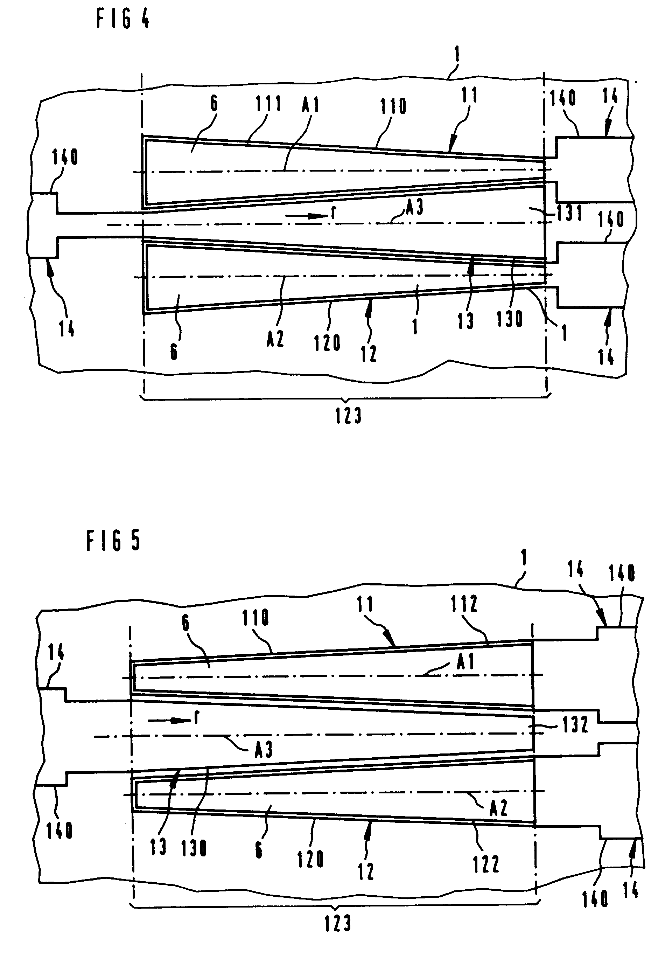

Dies kann beispielsweise erreicht werden, wenn in dem gemeinsamen Längsabschnitt 123 die Rippe 130 des dritten Rippenwellenleiters 13 in einer Längsrichtung, beispielsweise der Richtung r, eine taperförmige Erweiterung 131 (Figur 4) oder taperförmige Verjüngung 132 (Figur 5) und die Rippe 110 bzw. 120 des ersten und zweiten Rippenwellenleiters 11 bzw. 12 in dieser Richtung eine taperförmige Verjüngung 111 bzw. 121 (Figur 4) oder eine taperförmige Erweiterung 112 bzw. 122 (Figur 5) aufweist. Jede dieser taperförmigen Erweiterungen oder Verjüngungen ist vorzugsweise eine Verbreiterung bzw. breitenmäßige Verengung.

Bei einer derartigen Ausbildung der Anordnung wird ein "adiabatischer" Koppler erhalten, bei dem die Überkopplung nicht nur durch Modeninterferenz, sondern auch durch Modentransformation erreicht wird (siehe S. Xie et al: Carrier-injected GaInAsP/InP directional coupler optical switch with both tapered velocity and tapered coupling, IEEE Photon. Techn. Lett. Vol. 4, No. 2, Feb. 1992, S. 166-169).

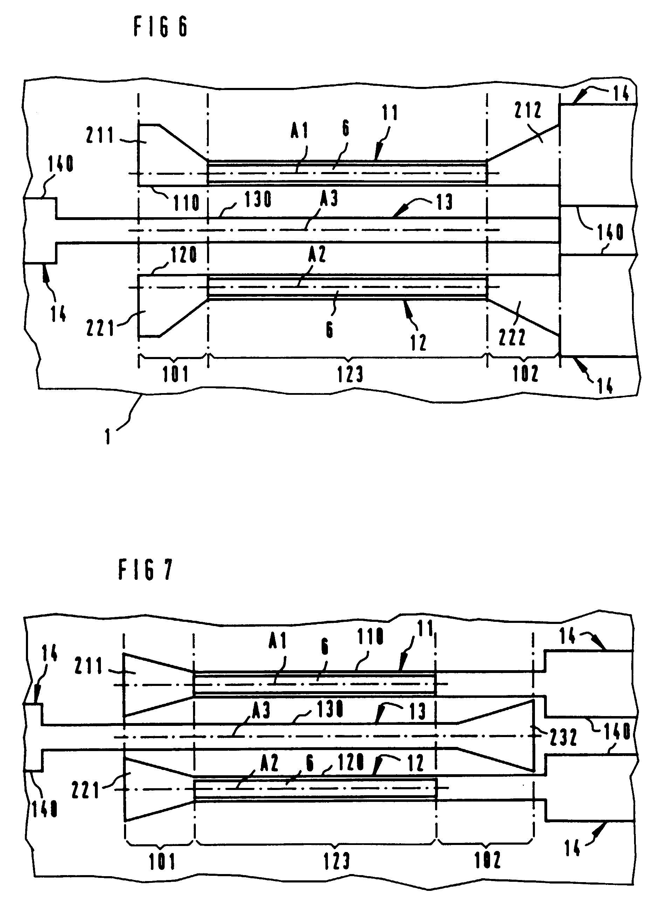

Das adiabatische Ineinanderüberführen der Moden kann auch erreicht werden, wenn der erste, zweite und/oder dritte Rippenwellenleiter 11, 12 bzw. 13 einen stirnseitigen Endabschnitt 101 und/oder 102 aufweist, in welchem die Rippe 110, 120 bzw. 130 dieses Rippenwellenleiters 11, 12 bzw. 13 eine vorzugsweise taperförmige Verbreiterung aufweist. In den Figuren 6 bis 8 sind Beispiele dafür dargestellt.

Im Beispiel nach Figur 6 weisen der erste Rippenwellenleiter 11 und der zweite Rippenwellenleiter 12 in einem sich links an den Langsabschnitt 123 anschließenden Endabschnitt 101 jeweils eine taperförmige Verbreiterung 211 bzw. 221 auf. Überdies weisen diese beiden Wellenleiter 11 und 12 in einem sich rechts an den Längsabschnitt 123 anschließenden Endabschnitt 102 jeweils eine taperförmige Verbreiterung 212 und 222 auf. Die taperförmigen Verbreiterungen 211, 212, 221 und 222 sind jeweils unsymmetrisch zur Längsachse A₁ bzw. A₂ des Wellenleiters 1 bzw. 12.

Beim Ausführungsbeispiel nach Figur 7 weisen der erste und zweite Wellenleiter 11 und 12 im linken Endabschnitt 101 eine zur Längsachse A₁ bzw. A₂ symmetrische Verbreiterung 211 und 221 auf, während der dritte Rippenwellenleiter 13 in einem sich rechts an den Längsabschnitt 123 anschließenden Endabschnitt eine zur Längsachse A₃ dieses Wellenleiters 13 symmetrische taperförmige Verbreiterung 232 aufweist.

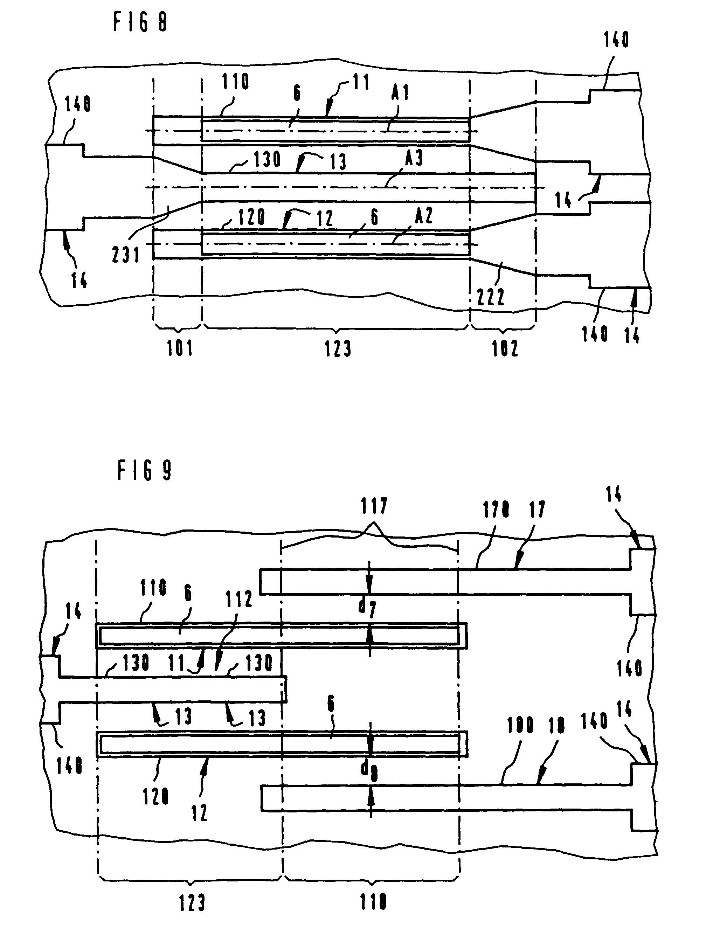

Beim Ausführungsbeispiel nach Figur 8 weist die Rippe 130 des dritten Rippenwellenleiters 13 in einem sich links an den Langsabschnitt 123 anschließenden Endabschnitt 101 eine zur Längsachse A₃ dieses Rippenwellenleiters 13 symmetrische Verbreiterung 231 auf, während der erste und zweite Rippenwellenleiter 11 und 12 in einem sich rechts an den Längsabschnitt 123 anschließenden Endabschnitt 102 jeweils eine zur Achse A₁ bzw. A₂ dieses Wellenleiters 11 bzw. symmetrische Verbreiterung 212 aufweist.

In allen drei Beispielen nach den Figuren 6 bis 8 erstrecken sich alle drei Wellenleiter 11 bis 13 zumindest bis zu den Enden der Endabschnitte 101 und 102, auch wenn keine Verbreiterung der Rippe eines solchen Rippenwellenleiters vorliegt.

Zur Verbesserung der Nebensprechunterdrückung kann die Anordnung zu der aus Figur 9 hervorgehenden Struktur erweitert werden. Danach ist außerhalb des Zwischenraums 112 zwischen dem ersten und zweiten Rippenwellenleiter 11 und 12 neben einem einen kontaktierten pn- oder pin-Übergang 3 aufweisenden Längsabschnitt 117 bzw. 118 des ersten und zweiten Rippenwellenleiters 11 und 12 je ein benachbarter, jeweils durch eine wellenleitende Schicht 2 und eine auf oder über dieser wellenleitenden Schicht 2 angeordnete streifenförmige Rippe 170 bzw. 180 definierter Rippenwellenleiter 17 bzw. 18 vorgesehen, dessen Rippe 170 bzw. 180 einen derart geringen Abstand d₇ bzw. d8 von der Rippe 110 bzw. 120 des benachbarten ersten bzw. zweiten Rippenwellenleiters 11 bzw. 12 aufweist, daß zwischen dem ersten Rippenwellenleiter 11 und dem diesem benachbarten Rippenwellenleiter 17 bzw. zwischen dem zweiten Rippenwellenleiter 12 und dem diesem benachbarten Rippenwellenleiter 18 ein geführter optischer Mode in der gleichen Weise wie zwischen dem dritten Rippenwellenleiter 13 und dem ersten oder zweiten Rippenwellenleiter 11 bzw. 12 überkoppeln kann. Der Längsabschnitt 117 bzw. 118 befindet sich vorzugsweise im wesentlichen außerhalb des Langsabschnitts 123. Bei der Anordnung nach Figur 9 erfolgt die Überkopplung des Nutz- und Übersprechsignals zweifach, so daß sich der Nebensprechwert quadriert. Zusätzlich erhöht die Plasmadampfung im geschalteten Wellenleiter die Nebensprechunterdrückung. Daher werden für diese Struktur im Vergleich zur Struktur nach Figur 1 für gleichen Nebensprechabstand geringere Schaltströme erwartet. Die in den Figuren 4 bis 8 dargestellten Maßnahmen können auch auf die Anordnung nach Figur 9 angewendet werden.

Bei den Ausführungsbeispielen nach Figur 1 bis 9 ist an die Wellenleiter, über die eingekoppelt oder ausgekoppelt wird, stirnseitig ein durch eine wellenleitende Schicht 2 und eine über dieser wellenleitenden Schicht 2 angeordnete streifenförmige Rippe 140 definierter streifenartiger Rippenwellenleiter 14 optisch angekoppelt, dessen durch die Breite b₄ seiner Rippe 140 definierte Breite breiter als die Breite der Rippe des Rippenwellenleiters ist, an den er angekoppelt ist. So ist an den dritten Rippenwellenleiter 13, über den eingekoppelt wird, der in Figur 3 im Schnitt dargestellte Rippenwellenleiter 14 wird der in Figur 3 im Schnitt dargestellte Rippenwellenleiter 14 mit der breiteren Rippe 140 angekoppelt. Bei den Beispielen nach den Figuren 1 bis 8 ist an die Rippenwellenleiter 11 und 12, über die ausgekoppelt wird, je ein Rippenwellenleiter 14 mit der breiteren Rippe 140angekoppelt. Beim Ausführungsbeispiel nach Figur 9 ist an die Rippenwellenleiter 17 und 18, über die ausgekoppelt wird, jeweils ein Rippenwellenleiter 14 mit breiterer Rippe 140 angekoppelt.

Die Verwendung eines an die erfindungsgemäße Anordnung angeschlossenen breiteren Rippenwellenleiters 14 hat den Vorteil, daß kleine Krümmungsradien bei geringen Strahlungsverlusten realisiert werden können, wobei es zweckmäßig ist, breitere Wellenleiter mit starker lateraler Wellenführung zu verwenden (siehe Pennings E.C.M.: Bends in optical ridge waveguides, CIP Koninklijke Bibliotheek, Den Haag, 1990). Diese können wegen der im Vergleich zum Richtkoppler verdoppelten Separation der Wellenleiter, über die ausgekoppelt wird, sehr verlustarm an die Anordnung angeschlossen werden.

Prinzipiell können auch optische Wellen über die Wellenleiter 11 und 12 bzw. 17 und 18 eingekoppelt und über den dritten Wellenleiter 13 ausgekoppelt werden.

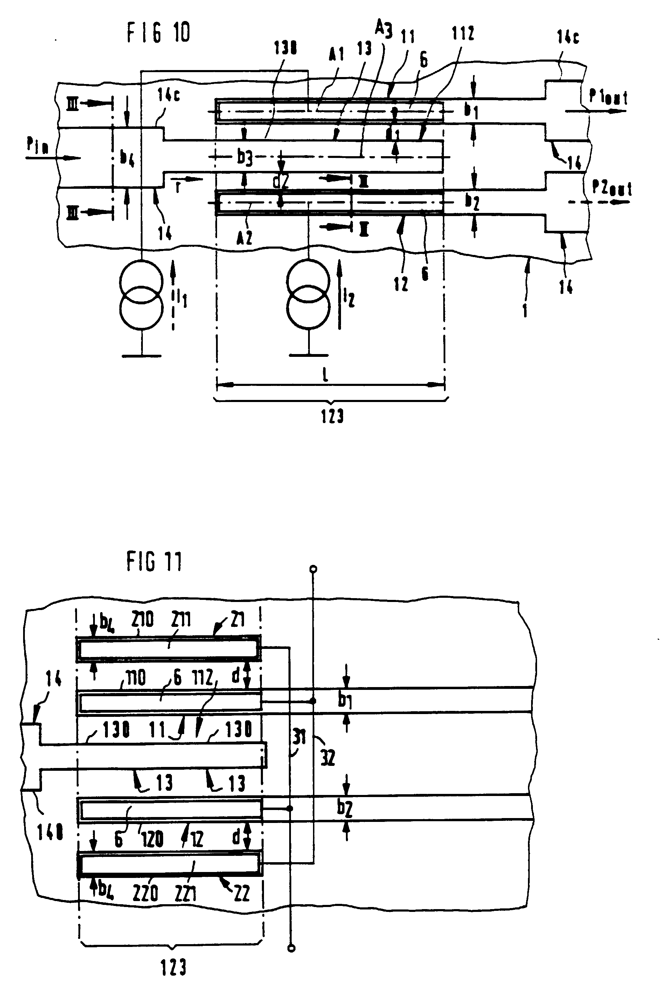

Das Ausführungsbeispiel nach Figur 10 unterscheidet sich vom Ausführungsbeispiel nach Figur 1 dadurch, daß die Breite b₃ des dritten Rippenwellenleiters 13 größer als die Breite b₁ des ersten Rippenwellenleiters 11 und größer als die Breite b₂ des zweiten Rippenwellenleiters 12 ist. Diese Maßnahme kompensiert eine Brechzahlerniedrigung im dritten Rippenwellenleiter 13, die durch eine laterale Ladungsträgerdiffusion vom stromdurchflossenen Kontakt her hervorgerufen wird. Dadurch wird im stromdurchflossenen Betriebszustand, bei dem der pn- bzw. pin-Übergang 3 entweder des ersten Rippenwellenleiters 11 oder des zweiten Rippenwellenleiters 12 in Durchlaßrichtung betrieben ist, ein synchrones Koppeln im symmetrischen Koppler, bei dem b₁ = b₂ gilt, erreicht, was ein vollständiges Überkoppeln für beide Polarisationen der Moden erlaubt.Das Ausführungsbeispiel nach Figur 10 ist nicht auf das Beispiel nach Figur 1 beschränkt, sondern kann die Besonderheiten der Beispiele nach den Figuren 2 bis 9 aufweisen. Vorteile des Ausführungsbeispiels nach Figur 10 gegenüber den Ausführungsbeispielen nach den Figuren 1 bis 9 sind: Reduzierte Polarisationsabhängigkeit, bessere Durchgangsverluste, niedrigeres Nebensprechen, weitere Erhöhung des Abstandes des ersten und zweiten Rippenwellenleiters 11 und 12 auf der Ausgangsseite der Anordnung.

Das Ausführungsbeispiel nach Figur 11 unterscheidet sich vom Ausführungsbeispiel nach Figur 1 dadurch, daß auf der vom Zwischenraum 112 zwischen dem ersten und zweiten Rippenwellenleiter 11 bzw 12 abgekehrten Seite des ersten und zweiten Rippenwellenleiters 11 und 12 je ein weiterer Rippenwellenleiter 21 bzw. 22 angeordnet ist, der sich vorzugsweise über die ganze Länge L des gemeinsamen Langsabschnitts 123 des ersten, zweiten und dritten Rippenwellenleiters 11, 12 und 13 erstreckt und einen sich vorzugsweise über die ganze Lange L dieses Langsabschnitts 123 erstreckenden, kontaktierten pn- oder pin-Übergang aufweist, der in der gleichen Weise wie der kontaktierte pn- oder pin-Übergang 3 des ersten und zweiten Rippenwellenleiters 11, 12 aufgebaut sein kann. Die durch die Breite b4 seiner Rippe 210 bzw. 220 definierte Breite jedes weiteren Rippenwellenleiters 21 bzw. 22 ist vorzugsweise gleich der Breite b₁ bzw. b₂ des ersten bzw. zweiten Rippenwellenleiters 11 bzw. 12 gewählt. Der Abstand jedes weiteren Rippenwellenleiters 21 bzw. 22 vom betreffenden ersten bzw. zweiten Rippenwellenleiter ist mit d₉ bezeichnet und vorzugsweise für beide weiteren Rippenwellenleiter 21 und 22 gleich. Die Elektrode des weiteren Rippenwellenleiters 21 bzw. 22 ist mit 211 bzw 221 bezeichnet und erstreckt sich vorzugsweise über den ganzen pn- bzw. pin-Übergang dieses Wellenleiters 21 bzw. 22. Vorzugsweise ist die Breite b₃ des dritten Wellenleiters 13 ersten bzw. zweiten Rippenwellenleiters 11 bzw. 12 gewählt. Das Ausführungsbeispiel nach Figur 10 ist nicht auf das Beispiel nach Figur 1 beschränkt, sondern kann die Besonderheiten jedes der Beispiele nach den Figuren 2 bis 10 aufweisen.

Der Betrieb der Anordnung nach Figur 11 erfolgt vorteilhafterweise so, daß entweder
der pn- oder pin-Übergang des ersten Rippenwellenleiters 11 und der pn- oder pin-Übergang des auf der vom Zwischenraum 112 abgekehrten Seite des zweiten Rippenwellenleiters 12 angeordneten weiteren Rippenwellenleiters 22 in Durchlaßrichtung und gleichzeitig der pn- oder pin-Übergang des zweiten Rippenwellenleiters 12 und der pn- oder pin-Übergang des auf der vom Zwischenraum 112 abgekehrten Seite des ersten Rippenwellenleiters 11 angeordneten weiteren Rippenwellenleiters 21 stromlos oder in Sperrichtung betrieben wird, oder
der pn- oder pin-Übergang des zweiten Rippenwellenleiters 12 und der pn- oder pin-Übergang des auf der vom Zwischenraum 112 abgekehrten Seite des ersten Rippenwellenleiters 11 angeordneten weiteren Rippenwellenleiters 21 in Durchlaßrichtung und gleichzeitig der pn- oder pin-Übergang des ersten Rippenwellenleiters 11 und der pn- oder pin-Übergang des auf der vom Zwischenraum 112 abgekehrten Seite des zweiten Rippenwellenleiters 12 angeordneten weiteren Rippenwellenleiters 22 stromlos oder in Sperrichtung betrieben wird.
Dazu ist es zweckmäßig, die Elektrode 6 des ersten Rippenwellenleiters 11 und die Elektrode 221 des weiteren Rippenwellenleiters 22 elektrisch, beispielsweise durch eine Leitung 31, miteinander zu verbinden. Ebenso ist es zweckmäßig, die Elektrode 6 des zweiten Rippenwellenleiters 12 und die Elektrode 211 des weiteren Rippenwellenleiters 21 elektrisch, beispielsweise durch eine Leitung 32, miteinander zu verbinden.

Diese Maßnahme erlaubt es, in jedem Betriebszustand ein symmetrisches Brechzahlprofil und somit einen völlig symmetrischen, synchronen Ausgangskoppler zu erzeugen, was ein stromunabhängiges vollständiges Überkoppeln für beide Polarisationen erlaubt.

Vorteile des Ausführungsbeispiels nach Figur 11 im Vergleich zu den Ausführungsbeispielen nach den Figuren 1 bis 9 sind: Reduzierte Polarisationsabhängigkeit, bessere Durchgangsverluste, niedrigeres Nebensprechen, digitale, d.h. weitgehend stromunabhängige Schaltcharakteristik, sowie eine weitere Vergrößerung des Abstandes des ersten und zweiten Rippenwellenleiters 11 und 12 auf der Ausgangsseite der Anordnung.

Die erfindungsgemaße Anordnung kann in allen Ausführungsbeispielen in der gleichen Schichtenfolge und mit den gleichen Materialien wie in der EP 0 415 225 A2 beschrieben hergestellt werden.

## Patentansprüche

1. Integriert-optische Anordnung, bestehend aus
- einem ersten, zweiten und dritten streifenartigen Rippenwellenleiter (11, 12, 13) auf einem Substrat (1) aus Halbleitermaterial, wobei
- jeder Rippenwellenleiter (11, 12, 13) durch eine auf oder in dem Substrat (1) ausgebildete wellenleitende Schicht (2) aus Halbleitermaterial und je eine auf oder über der wellenleitenden Schicht (2) angeordnete, eine Breite (b₁, b₂, b₃) dieses Rippenwellenleiters (11, 12, 13) definierende streifenförmige Rippe (110, 120, 130) definiert ist, wobei
- die Rippe (110) des ersten (11) und die Rippe (120) des zweiten Rippenwellenleiters (12) durch einen Zwischenraum (112) getrennt nebeneinander verlaufen und die Rippe (130) des dritten Rippenwellenleiters (13) in diesem Zwischenraum (112) angeordnet ist und einen derart geringen Abstand (d₁, d₂) von der Rippe (110) des ersten (11) und der Rippe (120) des zweiten Rippenwellenleiters (12) aufweist, daß ein in der wellenleitenden Schicht (2) unter der Rippe (110, 120) des dritten Rippenwellenleiters (13) geführter optischer Mode in die wellenleitende Schicht (2) unter der Rippe (110, 120) des ersten (11) und/oder der Rippe (120) des zweiten Rippenwellenleiters (12) überkoppeln kann und/oder ein in der wellenleitenden Schicht (2) unter der Rippe (110) des ersten (11) und/oder der Rippe (120) des zweiten Rippenwellenleiters (12) geführter optischer Mode in die wellenleitende Schicht (2) unter der Rippe (130) des dritten Rippenwellenleiters (13) überkoppeln kann, und wobei
- der erste und zweite Rippenwellenleiter (11, 12) jeweils einen elektrischen Kontakt (6) aufweisen
**dadurch gekennzeichnet,** daß
- im Bereich des den dritten Rippenwellenleiter (13) enthaltenden Zwischenraums (112) und im Bereich der Rippe (110) des ersten (11) und im Bereich der Rippe (120) des zweiten Rippenwellenleiters (12), ober- oder unterhalb der wellenleitenden Schicht (2), jeweils ein durch den Kontakt (6) dieses Rippenwellenleiters (11, 12) von außen kontaktierbarer pn- oder pin-Übergang (3) in einem Abstand (d) von der wellenleitenden Schicht (2) angeordnet ist und sich das p-dotierte Material dieses Übergangs (3) auf der von der wellenleitenden Schicht (2) abgekehrten Seite dieses Übergangs (3) befindet, und daß
- der dritte Rippenwellenleiter (13) unkontaktiert ist.

2. Anordnung nach Anspruch 1,
**dadurch gekennzeichnet,**
daß sich der pn- oder pin-Übergang (3) des ersten Rippenwellenleiters (11) und der pn- oder pin-Übergang (3) des zweiten Rippenwellenleiters (12) zumindest über einen gemeinsamen Längsabschnitt (123) der drei Rippenwellenleiter (11, 12, 13), in welchem der erste, zweite und dritte Rippenwellenleiter (11, 12, 13) gleichzeitig nebeneinander verlaufen, erstrecken und daß die pn- oder pin-Übergänge (3) des ersten und zweiten Rippenwellenleiters (11, 12) auf der ganzen Länge (L) dieses Langsabschnitts (123) kontaktiert sind.

3. Anordnung nach Anspruch 2,
**dadurch gekennzeichnet,**
daß in dem gemeinsamen Längsabschnitt (123) die Rippe (130) des dritten Rippenwellenleiters (13) in einer Längsrichtung (r) dieses dritten Rippenwellenleiters (13) eine taperförmige Erweiterung (131) oder Verjüngung (132) und die Rippe (110, 120) des ersten und/oder zweiten Rippenwellenleiters (11, 12) in dieser Längsrichtung (r) eine taperförmige Verjüngung (111, 121) oder Erweiterung (112, 122) aufweist.

4. Anordnung nach Anspruch 3,
**dadurch gekennzeichnet,**
daß die Erweiterung (112, 122, 131) und/oder Verjüngung (111, 121, 132) der Rippe (110, 112, 130) des ersten, zweiten und dritten Rippenwellenleiters (11, 12, 13) im gemeinsamen Längsabschnitt (123) eine Verbreiterung bzw. breitenmäßige Verengung der Rippe (110, 120, 130) ist.

5. Anordnung nach einem der vorhergehenden Ansprüche,
**dadurch gekennzeichnet,**
daß der erste und/oder zweite und/oder dritte Rippenwellenleitern (11, 12, 13) wenigstens einen stirnseitigen Endabschnitt (101, 102) aufweist, in welchem die Rippe (110, 120, 130) dieses Rippenwellenleiters (11, 12, 13) eine Verbreiterung (211, 212; 221, 222; 231, 232) aufweist.

6. Anordnung nach Anspruch 5,
**dadurch gekennzeichnet,**
daß eine Verbreiterung (211, 212; 221, 222; 231, 232) taperförmig ist.

7. Anordnung nach einem der Ansprüche 2 bis 6,
**dadurch gekennzeichnet,**
daß eine Verbreiterung (211, 212; 221, 222; 231, 232) außerhalb des kontaktierten gemeinsamen Längsabschnitts (123) angeordnet ist.

8. Anordnung nach einem der vorhergehenden Ansprüche,
**dadurch gekennzeichnet,**
daß an den dritten Rippenwellenleiter (13) stirnseitig ein durch eine wellenleitende Schicht (2) und eine über dieser wellenleitenden Schicht (2) angeordnete streifenförmige Rippe (140) definierter streifenartiger Rippenwellenleiter (14) optisch angekoppelt ist, dessen seine Breite (b₄) definierende Rippe (140) breiter als die Rippe (130) des dritten Rippenwellenleiters (13) ist.

9. Anordnung nach einem der vorhergehenden Ansprüche,
**dadurch gekennzeichnet,**
daß an den ersten und/oder zweiten Rippenwellenleiter (11, 12) stirnseitig ein durch eine wellenleitende Schicht (2) und eine auf oder über dieser wellenleitenden Schicht (2) angeordnete streifenförmige Rippe (140) definierter streifenartiger Rippenwellenleiter (14) optisch angekoppelt ist, dessen seine Breite (b₄) definierende Rippe (140) breiter als die Rippe (110, 120) des ersten oder zweiten Rippenwellenleiters (11, 12) ist, an den er angekoppelt ist.

10. Anordnung nach einem der vorhergehenden Ansprüche,
**dadurch gekennzeichnet,**
daß die Breite (b₃) des dritten Rippenwellenleiters (13) größer als die Breite (b₁) des ersten Rippenwellenleiters (11) und größer als die Breite (b₂) des zweiten Rippenwellenleiters (12) ist.

11. Anordnung nach einem der Ansprüche 2 bis 10,
**dadurch gekennzeichnet,**
daß außerhalb des Zwischenraumes (112) zwischen dem ersten und zweiten Rippenwellenleiter (11, 12) neben einem einen kontaktierten pn- oder pin-Übergang (3) aufweisenden Längsabschnitt (117, 118) des ersten und/oder zweiten Rippenwellenleiters (11, 12) ein benachbarter, jeweils durch eine wellenleitende Schicht (2) und eine auf oder über dieser wellenleitenden Schicht (2) angeordnete streifenförmige Rippe (170, 180) definierter Rippenwellenleiter (17, 18) verläuft, dessen Rippe (170, 180) einen derart geringen Abstand (d₇, d₈) von der Rippe (110, 120) des benachbarten ersten bzw. zweiten Rippenwellenleiters (11, 12) aufweist, daß zwischen dem ersten Rippenwellenleiter (11) und dem diesem benachbarten Rippenwellenleiter (17) bzw. zwischen dem zweiten Rippenwellenleiter (12) und dem diesem benachbarten Rippenwellenleiter (18) ein geführter optischer Mode überkoppeln kann.

12. Anordnung nach Anspruch 11,
**dadurch gekennzeichnet,**
daß sich der Längsabschnitt (117, 118) des ersten und/oder zweiten Rippenwellenleiters (11, 12), neben dem außerhalb des Zwischenraums (112) ein benachbarter Rippenwellenleiter (17, 18) verläuft, außerhalb des Längsabschnitts (123) befindet, in welchem der dritte Rippenwellenleiter (13) zwischen dem ersten und zweiten Rippenwellenleiter (11, 12) verläuft.

13. Anordnung nach Anspruch 11 oder 12,
**dadurch gekennzeichnet,**
daß an einen benachbarten Rippenwellenleiter (17, 18) stirnseitig ein durch eine wellenleitende Schicht (2) und eine auf oder über dieser wellenleitenden Schicht (2) angeordnete streifenförmige Rippe (140) definierter streifenartiger Rippenwellenleiter (14) optisch angekoppelt ist, dessen seine Breite (b₄) definierende Rippe (140) größer als die Breite (b₇, b₈) der Rippe (170, 180) des benachbarten Rippenwellenleiters (17, 18) ist.

14. Anordnung nach Anspruch 13,
**dadurch gekennzeichnet,**
daß die wellenleitende Schicht (2) eines benachbarten Rippenwellenleiters (17, 18) aus undotiertem oder n-dotiertem Halbleitermaterial besteht,'und daß die Rippe (170, 180) dieses benachbarten Rippenwellenleiters (13) aus Halbleitermaterial besteht.

15. Anordnung nach Anspruch 2 oder nach Anspruch 2 und einem der Ansprüche 3 bis 9,
**dadurch gekennzeichnet,**
daß im Bereich des gemeinsamen Langsabschnitts (123) des ersten, zweiten und dritten Rippenwellenleiters (11,12,13) auf der vom Zwischenraum (112) zwischen dem ersten und zweiten Rippenwellenleiter (11,12) abgekehrten Seite des ersten und zweiten Rippenwellenleiters (11,12) je ein weiterer Rippenwellenleiter (21,22) angeordnet ist, der einen kontaktierten pn- oder pin-Übergang aufweist.

16. Anordnung nach einem der vorhergehenden Ansprüche,
**dadurch gekennzeichnet,**
daß die wellenleitende Schicht (2) des dritten Rippenwellenleiters (13) aus undotiertem oder n-dotiertem Halbleitermaterial besteht und daß die Rippe (130) des dritten Rippenwellenleiters (13) aus Halbleitermaterial besteht.

17. Verfahren zum Betrieb einer Anordnung nach einem der vorhergehenden Ansprüche als Schalter,
**dadurch gekennzeichnet,**
daß die beiden kontaktierten pn- oder pin-Übergänge (3) des ersten und zweiten Rippenwellenleiters (11, 12) relativ zueinander unsymmetrisch betrieben werden, wobei ein Übergang (3) in Durchlaßrichtung, der andere stromlos oder in Sperrichtung geschaltet wird.

## Claims

1. Integrated optical arrangement comprising
- a first, second and third strip-like ribbed waveguide (11, 12, 13) on a substrate (1) made from semiconductor material,
- each ribbed waveguide (11, 12, 13) being defined by a wave-guiding layer (2), made from semiconductor material and formed on or in the substrate (1), and in each case a strip-shaped rib (110, 120, 130), arranged on or above the wave-guiding layer (2) and defining a width (b₁, b₂, b₃) of this ribbed waveguide (11, 12, 13),
- the rib (110) of the first ribbed waveguide (11), and the rib (120) of the second ribbed waveguide (12) extending separately next to one another through an interspace (112), and the rib (130) of the third ribbed waveguide (13) being arranged in this interspace (112) and having a spacing (d₁, d₂) from the rib (110) of the first ribbed waveguide (11) and from the rib (120) of the second ribbed waveguide (12) which is so small that an optical mode guided in the wave-guiding layer (2) below the rib (110, 120) of the third ribbed waveguide (13) can transfer into the wave-guiding layer (2) below the rib (110, 120) of the first ribbed waveguide (11) and/or the rib (120) of the second ribbed waveguide (12), and an optical mode guided in the wave-guiding layer (2) below the rib (110) of the first ribbed waveguide (11) and/or the rib (120) of the second ribbed waveguide (12) can transfer into the wave-guiding layer (2) below the rib (130) of the third ribbed waveguide (13), and
- the first and second ribbed waveguides (11, 12) in each case having an electrical contact (6), characterized in that,
- in the region of the interspace (112) containing the third ribbed waveguide (13), and in the region of the rib (110) of the first ribbed waveguide (11), and in the region of the rib (120) of the second ribbed waveguide (12), above or below the wave-guiding layer (2), in each case a pn or pin junction (3), with which the contact (6) of this ribbed waveguide (11, 12) can make contact from outside, is arranged at a spacing (d) from the wave-guiding layer (2) and the p-doped material of this junction (3) is located on the side of this junction (3) averted from the wave-guiding layer (2), and in that
- no contact is made with the third ribbed waveguide (13).

2. Arrangement according to Claim 1, characterized in that the pn or pin junction (3) of the first ribbed waveguide (11) and the pn or pin junction (3) of the second ribbed waveguide (12) extend at least over a common longitudinal section (123) of the three ribbed waveguides (11, 12, 13), in which the first, second and third ribbed waveguides (11, 12, 13) simultaneously extend next to one another, and in that contact is made with the pn or pin junctions (3) of the first and second ribbed waveguides (11, 12) along the entire length (L) of this longitudinal section (123).

3. Arrangement according to Claim 2, characterized in that in the common longitudinal section (123) the rib (130) of the third ribbed waveguide (13) has a tapering extension (131) or constriction (132) in a longitudinal direction (r) of this third ribbed waveguide (13), and the rib (110, 120) of the first and/or second ribbed waveguides (11, 12) has a tapering constriction (111, 121) or extension (112, 122) in this longitudinal direction (r).

4. Arrangement according to Claim 3, characterized in that the extension (112, 122, 131) and/or constriction (111, 121, 132) of the rib (110, 112, 130) of the first, second and third ribbed waveguides (11, 12, 13) in the common longitudinal section (123) is a widening or narrowing of the rib (110, 120, 130).

5. Arrangement according to one of the preceding claims, characterized in that the first and/or second and/or third ribbed waveguides (11, 12, 13) have at least one end-face end section (101, 102) in which the rib (110, 120, 130) of this ribbed waveguide (11, 12, 13) has a widening (211, 212; 221, 222; 231, 232).

6. Arrangement according to Claim 5, characterized in that a widening (211, 212; 221, 222; 231, 232) tapers.

7. Arrangement according to one of Claims 2 to 6, characterized in that a widening (211, 212; 221, 222; 231, 232) is arranged outside the common longitudinal section (123) with which contact is made.

8. Arrangement according to one of the preceding claims, characterized in that optically coupled at the end face to the third ribbed waveguide (13) is a strip-like ribbed waveguide (14) which is defined by a wave-guiding layer (2) and a strip-shaped rib (140) arranged above this wave-guiding layer (2), and whose rib (140) defining its width (b₄) is wider than the rib (130) of the third ribbed waveguide (13).

9. Arrangement according to one of the preceding claims, characterized in that optically coupled at the end face to the first and/or second ribbed waveguides (11, 12) is a strip-like ribbed waveguide (14) which is defined by a wave-guiding layer (2) and a strip-shaped rib (140) arranged in or above this wave-guiding layer (2), and whose rib (140) defining its width (b₄) is wider than the rib (110, 120) of the first or second ribbed waveguide (11, 12) to which it is coupled.

10. Arrangement according to one of the preceding claims, characterized in that the width (b₃) of the third ribbed waveguide (13) is larger than the width (b₁) of the first ribbed waveguide (11) and larger than the width (b₂) of the second ribbed waveguide (12).

11. Arrangement according to one of Claims 2 to 10, characterized in that there extends outside the interspace (112) between the first and second ribbed waveguides (11, 12) next to a longitudinal section (117, 118), having a pn or pin junction (3) with which contact is made, of the first and/or second ribbed waveguides (11, 12) a neighbouring ribbed waveguide (17, 18), which is defined in each case by a wave-guiding layer (2) and a strip-shaped rib (170, 180) arranged on or above this wave-guiding layer (2), and whose rib (170, 180) has a spacing (d₇, d₈) from the rib (110, 120) of the adjacent first or second ribbed waveguide (11, 12) which is so small that a guided optical mode can transfer between the first ribbed waveguide (11) and the ribbed waveguide (17) adjacent to the latter, or between the second ribbed waveguide (12) and the ribbed waveguide (18) adjacent to the latter.

12. Arrangement according to Claim 11, characterized in that the longitudinal section (117, 118) of the first and/or second ribbed waveguides (11, 12), next to which an adjacent ribbed waveguide (17, 18) extends outside the interspace (112), is located outside the longitudinal section (123) in which the third ribbed waveguide (13) extends between the first and second ribbed waveguides (11, 12).

13. Arrangement according to Claim 11 or 12, characterized in that optically coupled at the end face to an adjacent ribbed waveguide (17, 18) is a strip-like ribbed waveguide (14) which is defined by a wave-guiding layer (2) and a strip-shaped rib (140) arranged on or above this wave-guiding layer (2), and whose rib (140) defining its width (b₄) is larger than the width (b₇, b₈) of the rib (170, 180) of the adjacent ribbed waveguide (17, 18).

14. Arrangement according to Claim 13, characterized in that the wave-guiding layer (2) of an adjacent ribbed waveguide (17, 18) consists of undoped or n-doped semiconductor material, and in that the rib (170, 180) of this adjacent ribbed waveguide (13) consists of semiconductor material.

15. Arrangement according to Claim 2 or Claim 2 and one of Claims 3 to 9, characterized in that arranged in each case in the region of the common longitudinal section (123) of the first, second and third ribbed waveguides (11, 12, 13) on the side, averted from the interspace (112) between the first and second ribbed waveguides (11, 12), of the first and second ribbed waveguides (11, 12) is a further ribbed waveguide (21, 22) which has a pn or pin junction with which contact is made.

16. Arrangement according to one of the preceding claims, characterized in that the wave-guiding layer (2) of the third ribbed waveguide (13) consists of undoped or n-doped semiconductor material, and in that the rib (130) of the third ribbed waveguide (13) consists of semiconductor material.

17. Method for operating an arrangement according to one of the preceding claims as a switch, characterized in that the two pn or pin junctions (3), with which contact is made, of the first and second ribbed waveguides (11, 12) are operated asymmetrically relative to one another, one junction (3) being switched in the conducting direction, and the other being switched to be deenergized or in the non-conducting direction.

## Revendications

1. Arrangement optique intégré comprenant
- un premier, deuxième et troisième guide d'ondes à ruban (11, 12, 13) de type bande sur un substrat (1) en matériau semi-conducteur,
- chaque guide d'ondes à ruban (11, 12, 13) étant défini par une couche (2) formant guide d'ondes en matériau semi-conducteur réalisée sur ou dans le substrat (1) et par respectivement un ruban (110, 120, 130) en forme de bande disposé sur ou au-dessus de la couche (2) formant guide d'ondes et définissant une largeur (b₁, b₂, b₃) de ce guide d'ondes à ruban (11,12,13),
- le ruban (110) du premier guide d'ondes à ruban (11) et le ruban (120) du deuxième guide d'ondes à ruban (12), s'étendant l'un à côté de l'autre, séparés par un espace (112), et le ruban (130) du troisième guide d'ondes à ruban (13) étant disposé dans cet espace (112) à une distance (d₁, d₂) si faible par rapport au ruban (110) du premier guide d'ondes à ruban (11) et au ruban (120) du deuxième guide d'ondes à ruban (12) qu'un mode optique guidé dans la couche (2) formant guide d'ondes, sous le ruban (110, 120) du troisième guide d'ondes à ruban (13), peut passer dans la couche (2) formant guide d'ondes, sous le ruban (110,120) du premier guide d'ondes à ruban (11) et/ou sous le ruban (120) du deuxième guide d'ondes à ruban (12) et/ou qu'un mode optique guidé dans la couche (2) formant guide d'ondes, sous le ruban (110) du premier guide d'ondes à ruban (11) et/ou sous le ruban (120) du deuxième guide d'ondes à ruban (12) peut passer dans la couche (2) formant guide d'ondes, sous le ruban (130) du troisième guide d'ondes à ruban (13), et
- le premier et deuxième guide d'ondes à ruban (11, 12) comportant chacun un contact électrique (6),
caractérisé en ce que
- au niveau de l'espace (112) contenant le troisième guide d'ondes à ruban (13) et au niveau du ruban (110) du premier guide d'ondes à ruban (11) et au niveau du ruban (120) du deuxième guide d'ondes à ruban (12) est disposée au-dessus ou au-dessous de la couche (2) formant guide d'ondes, à une distance (d) de la couche (2) formant guide d'ondes, respectivement une jonction (3) PN ou PIN pouvant être mise en contact de l'extérieur par le contact (6) de ce guide d'ondes à ruban (11, 12) et que le matériau dopé P de cette jonction (3) se trouve sur le côté opposé à la couche (2) formant guide d'ondes de cette jonction (3), et en ce que
- le troisième guide d'ondes à ruban (13) est sans contact.

2. Arrangement selon la revendication 1, caractérisé en ce que la jonction (3) PN ou PIN du premier guide d'ondes à ruban (11) et la jonction (3) PN ou PIN du deuxième guide d'ondes à ruban (12) s'étendent au moins sur un tronçon longitudinal (123) commun des trois guides d'ondes à ruban (11, 12, 13), dans lequel le premier, deuxième et troisième guide d'ondes à ruban (11, 12, 13) s'étendent simultanément l'un à côté de l'autre, et en ce que les jonctions (3) PN ou PIN du premier et deuxième guide d'ondes à ruban (11,12) sont mises en contact sur toute la longueur (L) de ce tronçon longitudinal (123).

3. Arrangement selon la revendication 2, caractérisé en ce que dans le tronçon longitudinal (123) commun, le ruban (130) du troisième guide d'ondes à ruban (13) comporte dans un sens longitudinal (r) de ce troisième guide d'ondes à ruban (13) une extension (131) ou contraction (132) conique et le ruban (110,120) du premier et/ou deuxième guide d'ondes à ruban (11, 12), dans ce sens longitudinal (r), une contraction (111, 121) ou extension (112, 122) conique.

4. Arrangement selon la revendication 3, caractérisé en ce que l'extension (112, 122, 131) et/ou la contraction (111, 121, 132) du ruban (110, 112, 130) du premier, deuxième et troisième guide d'ondes à ruban (11, 12, 13) dans le tronçon longitudinal (123) est un élargissement ou rétrécissement en largeur du ruban (110,120,130).

5. Arrangement selon l'une quelconque des revendications précédentes, caractérisé en ce que le premier et/ou deuxième et/ou troisième guide d'ondes à ruban (11, 12, 13) comporte au moins un tronçon final (101, 102) frontal, dans lequel le ruban (110, 120, 130) de ce guide d'ondes à ruban (11, 12, 13) présente un élargissement (211, 212 ; 221, 222 ; 231, 232).

6. Arrangement selon la revendication 5, caractérisé en ce qu'un élargissement (211, 212 ; 221, 222 ; 231, 232) a une forme conique.

7. Arrangement selon l'une des revendications 2 à 6, caractérisé en ce qu'un élargissement (211, 212 ; 221, 222 ; 231, 232) est disposé en dehors du tronçon longitudinal (123) commun mis en contact.

8. Arrangement selon l'une quelconque des revendications précédentes, caractérisé en ce qu'un guide d'ondes à ruban (14) de type bande défini par une couche (2) formant guide d'ondes et un ruban (140) en forme de bande disposé au-dessus de cette couche (2) formant guide d'ondes est couplé optiquement du côté frontal au troisième guide d'ondes à ruban (13), dont le ruban (140) définissant sa largeur (b₄) est plus large que le ruban (130) du troisième guide d'ondes à ruban (13).

9. Arrangement selon l'une quelconque des revendications précédentes, caractérisé en ce qu'un guide d'ondes à ruban (14) de type bande défini par une couche (2) formant guide d'ondes et un ruban (140) en forme de bande disposé au-dessus de cette couche (2) formant guide d'ondes est couplé optiquement du côté frontal au premier et/ou deuxième guide d'ondes à ruban (11, 12), dont le ruban (140) définissant sa largeur (b₄) est plus large que le ruban (110, 120) du premier ou deuxième guide d'ondes à ruban (11, 12), auquel il est couplé.

10. Arrangement selon l'une quelconque des revendications précédentes, caractérisé en ce que la largeur (b₃) du troisième guide d'ondes à ruban (13) est supérieure à la largeur (b₁) du premier guide d'ondes à ruban (11) et supérieure à la largeur (b₂) du deuxième guide d'ondes à ruban (12).

11. Arrangement selon l'une des revendications 2 à 10, caractérisé en ce qu'un guide d'ondes à ruban (17, 18) contigu défini à chaque fois par une couche (2) formant guide d'ondes et un ruban (170, 180) en forme de bande disposé sur ou au-dessus de cette couche (2) formant guide d'ondes s'étend en dehors de l'espace (112) entre le premier et le deuxième guide d'ondes à ruban (11, 12), à côté d'un tronçon longitudinal (117, 118) du premier et/ou deuxième guide d'ondes à ruban (11, 12), tronçon qui comporte une jonction (3) PN ou PIN mise en contact, dont le ruban (170, 180) se trouve à une distance (d₇, d₈) si faible du ruban (110,120) du premier ou deuxième guide d'ondes à ruban (11, 12) contigu, qu'un mode optique guidé peut passer entre le premier guide d'ondes à ruban (11) et le guide d'ondes à ruban (17) contigu à celui-ci, ou entre le deuxième guide d'ondes à ruban (12) et le guide d'ondes à ruban (18) contigu à celui-ci.

12. Arrangement selon la revendication 11, caractérisé en ce que le tronçon longitudinal (117, 118) du premier et/ou deuxième guide d'ondes à ruban (11, 12), à côté duquel, en dehors de l'espace (112), s'étend un guide d'ondes à ruban (17, 18) contigu, se trouve en dehors du tronçon longitudinal (123), dans lequel s'étend le troisième guide d'ondes à ruban (13) entre le premier et le deuxième guide d'ondes à ruban (11, 12).

13. Arrangement selon la revendication 11 ou 12, caractérisé en ce qu'un guide d'ondes à ruban (14) de type bande défini par une couche (2) formant guide d'onde et un ruban (140) en forme de bande disposé sur ou au-dessus de cette couche (2) formant guide d'onde est couplé optiquement du côté frontal à un guide d'ondes à ruban (17, 18) contigu, dont le ruban (140) définissant sa largeur (b₄) est plus grand que la largeur (b₇, b₈) du ruban (170, 180) du guide d'ondes à ruban (17, 18) contigu.

14. Arrangement selon la revendication 13, caractérisé en ce que la couche (2) formant guide d'onde d'un guide d'ondes à ruban (17, 18) contigu est en matériau semi-conducteur non dopé ou dopé N et en ce que le ruban (170, 180) de ce guide d'ondes à ruban (13) contigu est en matériau semi-conducteur.

15. Arrangement selon la revendication 2 ou selon la revendication 2 et une des revendications 3 à 9, caractérisé en ce qu'au niveau du tronçon longitudinal (123) commun du premier, deuxième et troisième guide d'ondes à ruban (11, 12, 13), sur le côté du premier et deuxième guide d'ondes à ruban (11, 12), opposé à l'espace (112) entre le premier et deuxième guide d'ondes à ruban (11, 12), est disposé respectivement un autre guide d'ondes à ruban (21, 22) qui comporte une jonction PN ou PIN mise en contact.

16. Arrangement selon l'une quelconque des revendications précédentes, caractérisé en ce que la couche (2) formant guide d'ondes du troisième guide d'ondes à ruban (13) est en matériau semi-conducteur non dopé ou dopé N et en ce que le ruban (130) du troisième guide d'ondes à ruban (13) est en matériau semi-conducteur.

17. Procédé pour le fonctionnement d'un arrangement selon l'une quelconque des revendications précédentes comme commutateur, caractérisé en ce que les deux jonctions (3) PN ou PIN mises en contact du premier et deuxième guide d'ondes à ruban (11, 12) fonctionnent asymétriquement l'une par rapport à l'autre, une jonction (3) étant commutée en sens de conduction, l'autre étant sans courant ou commutée en sens de non-conduction.
